(19) Europäisches Patentamt / European Patent Office / Office européen des brevets

(11) **EP 3 537 620 B1**

(12) **EUROPEAN PATENT SPECIFICATION**

(45) Date of publication and mention
of the grant of the patent:
**03.01.2024 Bulletin 2024/01**

(21) Application number: **17868143.3**

(22) Date of filing: **06.11.2017**

(51) International Patent Classification (IPC):
$H04B\ 7/0456^{(2017.01)}$    $H04B\ 7/06^{(2006.01)}$

(52) Cooperative Patent Classification (CPC):
**H04B 7/0456; H04B 7/0626; H04B 7/0639;
H04B 7/0691**

(86) International application number:
**PCT/CN2017/109591**

(87) International publication number:
**WO 2018/082701 (11.05.2018 Gazette 2018/19)**

(54) **METHOD AND APPARATUS FOR CHANNEL INFORMATION QUANTIFICATION FEEDBACK, ELECTRONIC DEVICE, AND STORAGE MEDIUM**

VERFAHREN UND VORRICHTUNG ZUR KANALINFORMATIONSQUANTIFIZIERUNGSRÜCKKOPPLUNG, ELEKTRONISCHE VORRICHTUNG UND SPEICHERMEDIUM

PROCÉDÉ ET APPAREIL DE RÉTROACTION DE QUANTIFICATION D'INFORMATIONS DE CANAL, DISPOSITIF ÉLECTRONIQUE ET SUPPORT D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.11.2016 CN 201610963423**

(43) Date of publication of application:
**11.09.2019 Bulletin 2019/37**

(73) Proprietor: **ZTE Corporation
Shenzhen, Guangdong 518057 (CN)**

(72) Inventors:
• **WU, Hao**
**Shenzhen**
**Guangdong 518057 (CN)**
• **CHEN, Yijian**
**Shenzhen**
**Guangdong 518057 (CN)**
• **LI, YuNgok**
**Shenzhen**
**Guangdong 518057 (CN)**
• **LU, Zhaohua**
**Shenzhen**
**Guangdong 518057 (CN)**

(74) Representative: **Regimbeau
20, rue de Chazelles
75847 Paris Cedex 17 (FR)**

(56) References cited:
EP-A1- 2 800 290       WO-A1-2014/198037
WO-A1-2015/152624     CN-A- 101 388 703
CN-A- 102 546 110      CN-A- 104 202 276
US-A1- 2014 177 745    US-A1- 2016 080 058
US-B2- 9 425 871

**Description**

**TECHNICAL FIELD**

The present disclosure relates to the field of communications and, in particular, to a method and apparatus used for channel information quantification feedback, an electronic device, and a storage medium.

**BACKGROUND**

In a wireless communication system, a transmitting end and a receiving end generally use multiple antennas to transmit and receive to obtain a higher rate. One principle of the Multiple-Input-Multiple-Output (MIMO) technology is to utilize some of channel characteristics to achieve multi-layer transmission that matches the channel features. The MIMO technology can improve the system performance effectively, and can improve the performance significantly without increasing bandwidth and power. Therefore, the MIMO technology is a promising technology widely used in current systems. For example, in Long Term Evolution (LTE) and Long Term Evolution-Advanced (LTE A) systems, transmission modes 2 to 10 using the multi-antenna technology are provided. The multi-antenna technology involves multiple concepts and technologies. To facilitate understanding, the concepts of some key technologies are described below.

In general, two feedback manners: periodic feedback and aperiodic feedback are provided for Channel State Information (CSI). For example, in the LTE/LTE-A system, periodic feedback is performed by using a Physical Uplink Control Channel (PUCCH), and aperiodic feedback is performed by using a Physical Uplink Shared Channel (PUSCH). A terminal feeds back CSI in two manners: a base station may configure the terminal to measure and quantize the channel information and to feed back the quantized CSI information (including Rank Indicator (RI), Precoding Matrix Indicator (PMI) and Channel Quality Indicator (CQI)) periodically through a PUCCH. If needed, the base station may also trigger the terminal aperiodically abruptly to report CSI (including RI, PMI and CQI) so as to use a PUSCH to overcome the problem where periodic feedback is not in real time and the CSI quantization accuracy is limited by overheads of a control channel.

The basic principle of codebook-based quantized channel information feedback is briefly described as follows: Assuming that the limited feedback channel capacity is B bps/Hz, then the number of available codewords is $N = 2^B$.

$$\Re = \left\{ F_1, F_2 \cdots F_N \right\}$$

The feature vector space of the channel matrix is quantized to form a codebook space . The transmitting end and the receiving end jointly save or generate this codebook in real time (the same at the transmitting end and at the receiving end). According to the channel matrix H obtained by the receiving end, the receiving end selects, according to a certain criterion, a codeword $\hat{F}$ that best matches the channel from $\Re$ , and feeds back the codeword serial number $i$ (that is, PMI) to the transmitting end. The transmitting end finds the corresponding precoding codeword $\hat{F}$ according to the serial number $i$, thereby obtaining channel information. $\hat{F}$ denotes the feature vector information of the channel.

The principle of codeword construction in the LTE system is described as follows: The codebooks in LTE keeps evolving with the evolution of the standard version, and in Release 8 and Release 9, the 4-antenna codebook and the 2-antenna codebook are all in the form of single codewords, and only one PMI has the value of i = 1, ..., N11, where N11 denotes the number of codewords. For the 8-antenna codebook in Release 10 and the 4-antenna codebook in Release 12, double-codebook feedback is implemented. That is, the codeword may be written in the form of W = W1 × W2. W1 is a long-term feedback codebook called the first codebook. W1 is a short-term feedback codebook called the second codebook. The function of W2 is to select one of M1 candidate beams in the W1 codeword and to select the polarization phase Co-phasing for the beam selected for each polarization direction of the same data layer. Each codeword in W2 is quantized and fed back with PMI2. The value of W2 is i2 = 1, ..., M1. M1 denotes the number of W2. For details, see the LTE Release 10 protocol.

The codewords before Release 12 are for 1D antenna arrays. For codewords belonging to 1D, in the design in the codebook in Release 13, since more antennas are used, the dimension of the codebook increases. The antenna topology is generally planar, that is, an antenna with two dimensions is designed with 2D codewords. Thus, each beam in the first codebook W1 has a 2-dimensional form $v_m \otimes u_n$. $v_m$ and $u_n$ are Discrete Fourier Transform (DFT) of the first dimension and DFT of the second dimension, respectively. $v_m \otimes u_n$ denotes the Kronecker product of $v_m$ and $u_n$. $m = 1,2,\cdots, B_1$, $n = 1, 2,\cdots, B_2$. The number of the first-dimension ports (in the present disclosure, the ports include antennas/ports/transmission units/array/array elements and other apparatuses capable of sending signals) is N1. The number of the second-dimension ports is N2. The DFT corresponding to the first-dimension ports is oversampled by O1 times. The DFT corresponding to the second-dimension ports is oversampled by O2 times. The number of DFT of the first-dimension or second-dimension antennas is a multiple of the oversampling factor of the number of ports. Thus, B1 =

$N1 \times O1$ and $B2 = N2 \times O2$. O1 denotes the first-dimension oversampling factor and O2 denotes the second-dimension oversampling factor. The first-dimension codebook of the first codebook is denoted as PMI11, and the value of PMI11 is $i11 = 1, ..., N11$. The second-dimension codebook of the first codebook is denoted as PMI12, and the value of PMI12 is $i12 = 1, ..., N12$. For the index of each of the preceding PMI11 and PMI12, there are M1 W2 codewords. Each W2 codeword is for selection of a 2-dimensional beam from W1 and Co-phasing of different polarization directions. The corresponding codeword index is PMI2, denoted as $i2 = 1, ..., M1$.

Without loss of generality, codewords of the number (N11 = 1) of first-dimension ports or the number (N12 = 1) of second-dimension ports become 1D codewords, and codewords of the number (N11 > 1) of first-dimension ports and the number (N12 > 1) of second-dimension ports become 2D codewords. In the case of 1D codeword and single-codeword structure, the codebook is denoted as PMI or i. In the case of 1D codeword and double-codeword structure, the codebook is denoted as PMIland PMI2 and the index is denoted as i1/i2. In the case of 2D codeword, the codebook is denoted as three codebook indexes PMI11, PMI12 and PMI2 or denoted as indexes I11, i12 and i2.

In the current system, the pre-coding matrix is fed back or the beams are configured on the basis of the strongest path information in the channel, and information about other paths of the channel is ignored. As a result, fed-back or configured information does not well match the channel, thus affecting the performance of the system. In addition, this feedback manner is applicable only to antenna arrays with strong antenna-port correlation, and is not applicable to a scenario where antenna panels are unevenly spaced. In fact, in a 5G system, antennas are distributed over different panels according to subarrays. Thus, correlation between antennas is strong within each subarray, and antenna correlation between subarrays is not necessarily strong. Therefore, when a uniform strong-correlation DFT codebook feedback manner is used for the entire antenna array, the performance is not ideal.

The reference US 20160080058A1 discloses a method for transmitting, by a terminal, feedback information to a network for partial beamforming based on a multi-antenna in a wireless communication system. The reference EP 2800290A1 discloses a method for transmitting channel state information, for realizing the transmission of channel information which supports CoMP transmission. The reference US 20140177745A1 discloses a method for receiving a first set of channel state information reference signals on resource elements, and a second set of channel state information reference signals on resource elements.

SUMMARY

To solve the preceding problems, embodiments of the present disclosure provide a method and apparatus used for channel information quantification feedback, an electronic device, and a storage medium.
The invention is set out in the appended set of claims.

BRIEF DESCRIPTION OF DRAWINGS

FIG. 1 is flowchart one of a method for channel information quantification feedback according to an embodiment of the present disclosure;

FIG. 2 is flowchart two of a method for channel information quantification feedback according to an embodiment of the present disclosure;

FIG. 3 is a schematic diagram of a 5G large-scale antenna array according to an embodiment of the present disclosure;

FIG. 4 is structure diagram one of an apparatus for channel information quantification feedback according to an embodiment of the present disclosure;

FIG. 5 is structure diagram two of an apparatus for channel information quantification feedback according to an embodiment of the present disclosure; and

FIG. 6 is a structure diagram of an electronic device according to an embodiment of the present disclosure.

DETAILED DESCRIPTION

To provide a more detailed understanding of features and content of embodiments of the present disclosure, implementation of embodiments of the present disclosure is described below in detail with reference to the accompanying drawings. The accompanying drawings are provided for reference only and are not intended to limit embodiments of the present disclosure.

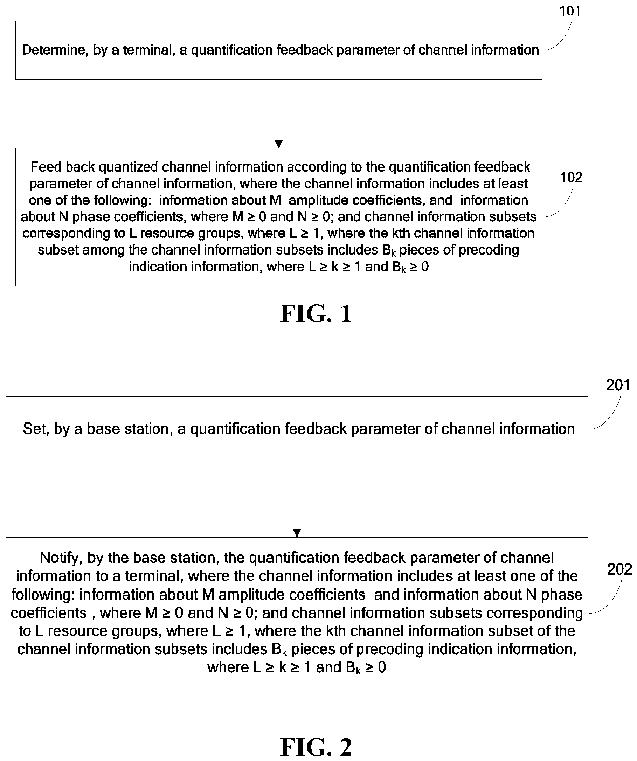

FIG. 1 is flowchart one of a method for channel information quantification feedback according to an embodiment of the present disclosure. As shown in FIG. 1, the method for channel information quantification feedback includes the steps described below.

In step 101, a terminal determines a quantification feedback parameter of channel information.

In step 102, channel information is fed back according to the quantification feedback parameter of channel information, where the channel information includes at least one of the following: information about M amplitude coefficients and information about N phase coefficients, where $M \geq 0$ and $N \geq 0$; and channel information subsets corresponding to L resource groups, where $L \geq 1$, where the kth channel information subset among the channel information subsets includes $B_k$ pieces of precoding indication information, where $L \geq k \geq 1$ and $B_k \geq 0$.

In this embodiment of the present disclosure, the quantification feedback parameter of channel information includes at least one of the following:

configuration information about channel information calculation manner;

resource grouping information;

configuration information about a precoding codebook;

configuration information about precoding indication feedback;

feedback configuration information about amplitude coefficients;

feedback configuration information about phase coefficients;

configuration information about a relationship between the channel information of different resource groups; and

layer configuration information.

In this embodiment of the present disclosure, the configuration information about channel information calculation manner includes at least one of the following: a data transmission manner, a channel matrix calculation manner, an interference calculation manner, a precoding construction manner, and acquisition by using a codebook data resource.

In this embodiment of the present disclosure, the resource grouping information includes at least one of the following: a value of L, the number of resources included in each resource group, and resource allocation information of each resource group.

In this embodiment of the present disclosure, the method further includes: associating the resource grouping information with quasi-common location (QCL) information.

In this embodiment of the present disclosure, the method further includes: associating the kth piece of configuration information about a precoding codebook with configuration information about a precoding codebook in the kth resource group.

In this embodiment of the present disclosure, the configuration information about a precoding codebook in the kth resource group is associated with the resource grouping information; and

the configuration information about a precoding codebook in the kth resource group is associated with the resource grouping information; and the configuration information about a precoding codebook in the kth resource group is associated with resource allocation information in the kth resource group,

where the configuration information about a precoding codebook in the kth resource group includes dimension information about a precoding matrix and/or information about the number of precoding matrixes in a codebook.

In this embodiment of the present disclosure, the configuration information about a precoding codebook includes the number P ($P \geq 1$) of precoding codebook levels and/or the number of precodings in each level of precoding codebooks.

In this embodiment of the present disclosure, precoding codebooks are divided into P ($P \geq 1$) levels, and the precoding codebook of a pth level is obtained by performing phase rotation on the precoding codebook of a (p-1)th level, where $P \geq p \geq 2$.

In this embodiment of the present disclosure, the minimum unit of the phase rotation of the precoding codebook of a (p-1)th level is less than the minimum unit of phase rotation of the precoding codebook of a (p-2)th level, where P≥p≥3; and/or

the minimum unit of the phase rotation of the precoding codebook of a (p-2)th level is A times the minimum unit of the phase rotation of the precoding codebook of a (p-1)th level, where P≥p≥3 and A > 1; and/or

the configuration information about a precoding codebook includes the minimum unit of the phase rotation of the precoding codebook of a (p-1)th level, where P≥p≥2.

In this embodiment of the present disclosure, a frequency-domain granularity of precoding indication information feedback to which the codebook of the (p-1)th level is associated is greater than the frequency-domain granularity of precoding indication information feedback to which the codebook of the pth level is associated, where P≥p≥2, and/or

a period of the precoding indication information feedback to which the precoding codebook of a (p-1)th level is associated is greater than a period of the precoding indication information feedback to which the precoding codebook of a pth level is associated, where P≥p≥2, and/or

the configuration information about precoding indication feedback includes the frequency-domain granularity and/or the period of the precoding indication information feedback to which the codebook of the pth level is associated, where P ≥ P≥1.

In this embodiment of the present disclosure, the method further includes: associating the kth piece of configuration information about precoding indication feedback with precoding feedback configuration information in the kth resource group.
In this embodiment of the present disclosure, the precoding feedback configuration information in the kth resource group includes the number of pieces of precoding indication information and/or a frequency-domain granularity of the precoding indication information.
In this embodiment of the present disclosure, the method further includes: feeding back a physical channel of precoding indication information in the kth resource group, where the precoding indication information in the kth resource group has a periodic feedback mode and an aperiodic feedback mode as well as a time-domain position of precoding indication information feedback in the kth resource group.
In this embodiment of the present disclosure, the configuration information about precoding indication feedback includes whether precoding indication information is acquired by using a codebook data resource.
The feedback configuration information about amplitude coefficients includes information about the number of amplitude coefficients that are fed back, where when a value of the number of the amplitude coefficients is 0, no amplitude information is fed back.
In this embodiment of the present disclosure, the method further includes: associating the mth piece of feedback configuration information about amplitude coefficients with a channel correlation between the kith resource group and the $k_2$th resource group, where M≥m≥0.
In this embodiment of the present disclosure, feedback configuration information of the mth amplitude coefficient includes the number of quantized feedback states of the mth amplitude coefficient, where the feedback configuration information about amplitude coefficients includes each amplitude coefficient using the same number of quantized feedback states, where M≥ m≥0.
In this embodiment of the present disclosure, the feedback configuration information about amplitude coefficients includes at least one of the following information: a frequency-domain granularity of amplitude coefficient feedback, an aperiodic feedback mode of the amplitude coefficient, and coding manner information of multiple amplitude coefficients, where the coding manner information includes at least one of the following: independent coding and joint coding.
In this embodiment of the present disclosure, the feedback configuration information about phase coefficients includes whether phase information is acquired by using a codebook data resource; and

the feedback configuration information about amplitude coefficients includes whether amplitude information is acquired by using a codebook data resource,

where the feedback configuration information about phase coefficients includes information about the number of phase coefficients that are fed back, where when a value of the number of the phase coefficients is 0, no phase information is fed back.

In this embodiment of the present disclosure, the method further includes: associating the feedback configuration information about a nth phase coefficient with a channel correlation between the kith resource group and the $k_2$th resource

group, where $N \geq n \geq 0$.

In this embodiment of the present disclosure, feedback configuration information of the nth phase coefficient includes the number of quantized feedback states of the nth phase coefficient, where the feedback configuration information about phase coefficients includes each phase coefficient using the same number of quantized feedback states, where $N \geq n \geq 0$.

In this embodiment of the present disclosure, the feedback configuration information about phase coefficients includes at least one of the following information: a frequency-domain granularity of phase coefficient feedback, an aperiodic feedback mode of the phase coefficient, and coding manner information of multiple phase coefficients, where the coding manner information includes at least one of the following: independent coding and joint coding.

In this embodiment of the present disclosure, the configuration information about a relationship between the channel information of different resource groups includes at least one of the following: the kith resource group and the $k_2$th resource group using same precoding codebook configuration, the kith resource group and the $k_2$th resource group using same precoding indication information feedback configuration, the kith resource group and the $k_2$th resource group using same precoding indication information, only a phase difference and/or an amplitude difference existing between precoding matrixes indicated by precoding indication information fed back by the kith resource group and the $k_2$th resource group, and whether an amplitude coefficient and/or a phase coefficient is fed back between the kith resource group and the $k_2$th resource group.

In this embodiment of the present disclosure, the layer configuration information includes information about the minimum and/or maximum number of layers supported.

In this embodiment of the present disclosure, the method further includes: associating the layer configuration information with the configuration information about channel information calculation manner, where a channel information calculation manner includes at least one of the following: a data transmission manner and association of a precoding construction manner.

In this embodiment of the present disclosure, the layer configuration information includes different layers feeding back the same amplitude coefficient and/or phase coefficient.

In this embodiment of the present disclosure, a resource in each of the resource groups includes at least one of:

a pilot port associated with the channel information;

a pilot time-frequency resource associated with the channel information;

a pilot time-domain symbol associated with the channel information; and

a pilot precoding manner associated with the channel information.

In this embodiment of the present disclosure, the terminal determines the quantification feedback parameter of channel information in at least one of the following manners:

a high-layer signaling configured by a base station;

a physical-layer signaling configured by the base station; and

measurement of channel characteristics.

In this embodiment of the present disclosure, the method further includes: reporting, by the terminal, the determined quantification feedback parameter of channel information to a base station through a physical-layer channel or through high-layer signaling.

In this embodiment of the present disclosure, configuration information about codebook data resource includes at least one of the following: information about a starting time-domain resource and a starting frequency-domain resource of codebook data, codebook matrix size configuration information associated with a codebook data resource, and information about a type of the codebook data resource.

In this embodiment of the present disclosure, partial channel information associated with the codebook data resource includes at least one of the following: precoding indication information, amplitude coefficient information, and/or phase coefficient information.

FIG. 2 is flowchart two of a method for channel information quantification feedback according to an embodiment of the present disclosure. As shown in FIG. 2, the method for channel information quantification feedback includes the steps described below.

In step 201, a base station sets a quantification feedback parameter of channel information.

In step 202, the base station notifies the quantification feedback parameter of channel information to a terminal, where the channel information includes at least one of the following: information about M amplitude coefficients and information about N phase coefficients, where M≥0 and N≥0; and L channel information subsets corresponding to resource groups, where L≥1, where the kth channel information subset among the channel information subsets includes $B_k$ pieces of precoding indication information, where L≥ k≥1 and $B_k$ ≥ 0.

In this embodiment of the present disclosure, the quantification feedback parameter of channel information includes at least one of the following:

configuration information about channel information calculation manner;

resource grouping information;

configuration information about a precoding codebook;

configuration information about precoding indication feedback;

feedback configuration information about amplitude coefficients;

feedback configuration information about phase coefficients;

configuration information about a relationship between the channel information of different resource groups; and

layer configuration information.

In this embodiment of the present disclosure, the configuration information about channel information calculation manner includes at least one of the following: a data transmission manner, a channel matrix calculation manner, an interference calculation manner, a precoding construction manner, and acquisition by using a codebook data resource.

In this embodiment of the present disclosure, the resource grouping information includes at least one of the following: a value of L, the number of resources included in each resource group, and resource allocation information of each resource group.

In this embodiment of the present disclosure, the method further includes: associating the resource grouping information with quasi-common location (QCL) information.

In this embodiment of the present disclosure, the method further includes: associating the kth piece of configuration information about a precoding codebook with configuration information about a precoding codebook in the kth resource group.

In this embodiment of the present disclosure, the configuration information about a precoding codebook in the kth resource group is associated with the resource grouping information; and

the configuration information about a precoding codebook in the kth resource group is associated with the resource grouping information; and the configuration information about a precoding codebook in the kth resource group is associated with resource allocation information in the kth resource group,

where the configuration information about a precoding codebook in the kth resource group includes dimension information about a precoding matrix and/or information about the number of precoding matrixes in a codebook.

In this embodiment of the present disclosure, the method further includes: associating the kth piece of configuration information about precoding indication feedback with precoding feedback configuration information in the kth resource group.

In this embodiment of the present disclosure, the precoding feedback configuration information in the kth resource group includes the number of pieces of precoding indication information and/or a frequency-domain granularity of the precoding indication information.

In this embodiment of the present disclosure, the method further includes: feeding back a physical channel of precoding indication information in the kth resource group, where the precoding indication information in the kth resource group has a periodic feedback mode and an aperiodic feedback mode as well as a time-domain position of precoding indication information feedback in the kth resource group.

In this embodiment of the present disclosure, the method further includes: associating feedback configuration information about mth amplitude coefficient with a channel correlation between the kith resource group and the $k_2$th resource group, where M≥m≥0.

In this embodiment of the present disclosure, feedback configuration information of the mth amplitude coefficient includes the number of quantized feedback states of the mth amplitude coefficient, where the feedback configuration information about amplitude coefficients includes each amplitude coefficient using the same number of quantized feedback states, where $M \geq m \geq 0$.

In this embodiment of the present disclosure, the feedback configuration information about amplitude coefficients includes at least one of the following information: a frequency-domain granularity of amplitude coefficient feedback , an aperiodic feedback mode of the amplitude coefficient, and coding manner information of multiple amplitude coefficients, where the coding manner information includes at least one of the following: independent coding and joint coding.

In this embodiment of the present disclosure, the method further includes: associating the feedback configuration information about a nth phase coefficient with a channel correlation between the kith resource group and the $k_2$th resource group, where $N \geq n \geq 0$.

In this embodiment of the present disclosure, feedback configuration information of the nth phase coefficient includes the number of quantized feedback states of the nth phase coefficient, where the feedback configuration information about phase coefficients includes each phase coefficient using the same number of quantized feedback states, where $N \geq n \geq 0$.

In this embodiment of the present disclosure, the feedback configuration information about phase coefficients includes at least one of the following information: a frequency-domain granularity of phase coefficient feedback, an aperiodic feedback mode of the phase coefficient, and coding manner information of multiple phase coefficients, where the coding manner information includes at least one of the following: independent coding and joint coding.

In this embodiment of the present disclosure, the configuration information about a relationship between the channel information of different resource groups includes at least one of the following: the kith resource group and the $k_2$th resource group using same precoding codebook configuration, the kith resource group and the $k_2$th resource group using same precoding indication information feedback configuration, the kith resource group and the $k_2$th resource group using same precoding indication information, only a phase difference and/or an amplitude difference existing between precoding matrixes indicated by precoding indication information fed back by the kith resource group and the $k_2$th resource group, and whether an amplitude coefficient and/or a phase coefficient is fed back between the kith resource group and the $k_2$th resource group.

In this embodiment of the present disclosure, the layer configuration information includes information about the minimum and/or maximum number of layers supported.

In this embodiment of the present disclosure, the method further includes: associating the layer configuration information with the configuration information about channel information calculation manner, where a channel information calculation manner includes at least one of the following: a data transmission manner and association of a precoding construction manner.

In this embodiment of the present disclosure, the layer configuration information includes different layers feeding back the same amplitude coefficient and/or phase coefficient.

In this embodiment of the present disclosure, a resource in each of the resource groups includes at least one of:

a pilot port associated with the channel information;
a pilot time-frequency resource associated with the channel information;
a pilot time-domain symbol associated with the channel information; and
a pilot precoding manner associated with the channel information.

In this embodiment of the present disclosure, the base station notifies the quantification feedback parameter of channel information to the terminal in at least one of the following manners:

a high-layer signaling; and

a physical-layer signaling.

In this embodiment of the present disclosure, the configuration information about a precoding codebook includes the number P ($P \geq 1$) of precoding codebook levels and/or the number of precodings in each level of precoding codebooks.

In this embodiment of the present disclosure, precoding codebooks are divided into P ($P \geq 1$) levels, and the precoding codebook of a pth level is obtained by performing phase rotation on the precoding codebook of a (p-1)th level, where $P \geq p \geq 2$.

In this embodiment of the present disclosure, the minimum unit of the phase rotation of the precoding codebook of a (p-1)th level is less than the minimum unit of phase rotation of the precoding codebook of a (p-2)th level, where $P \geq p \geq 3$; and/or

the minimum unit of the phase rotation of the precoding codebook of a (p-2)th level is A times the minimum unit of the phase rotation of the precoding codebook of a (p-1)th level, where P≥p≥3 and A > 1; and/or

the configuration information about a precoding codebook includes the minimum unit of the phase rotation of the precoding codebook of a (p-1)th level, where P≥p≥2.

In this embodiment of the present disclosure, a frequency-domain granularity of precoding indication information feedback to which the codebook of the (p-1)th level is associated is greater than the frequency-domain granularity of precoding indication information feedback to which the codebook of the pth level is associated, where P≥p≥2, and/or

a period of the precoding indication information feedback to which the precoding codebook of a (p-1)th level is associated is greater than the period of the precoding indication information feedback to which the precoding codebook of a pth level is associated, where P≥p≥2, and/or

the configuration information about precoding indication feedback includes the frequency-domain granularity and/or the period of the precoding indication information feedback to which the codebook of the pth level is associated, where P ≥p≥1.

In this embodiment of the present disclosure, the configuration information about precoding indication feedback includes whether precoding indication information is acquired by using a codebook data resource.
In this embodiment of the present disclosure, the feedback configuration information about amplitude coefficients includes information about the number of amplitude coefficients that are fed back, where when a value of the number of the amplitude coefficients is 0, no amplitude information is fed back.
The feedback configuration information about amplitude coefficients includes whether amplitude information is acquired by using a codebook data resource.
In this embodiment of the present disclosure, the feedback configuration information about phase coefficients includes information about the number of phase coefficients that are fed back, where when a value of the number of the phase coefficients is 0, no phase information is fed back.
The feedback configuration information about phase coefficients includes whether phase information is acquired by using a codebook data resource.
In this embodiment of the present disclosure, configuration information about codebook data resource includes at least one of the following: information about a starting time-domain resource and a starting frequency-domain resource of codebook data, codebook matrix size configuration information associated with a codebook data resource, and information about a type of the codebook data resource.
In this embodiment of the present disclosure, partial channel information associated with the codebook data resource includes at least one of the following: precoding indication information, amplitude coefficient information, and/or phase coefficient information.
The method for channel information quantification feedback provided in embodiments of the present disclosure is further described below in conjunction with specific application scenarios.

Example one

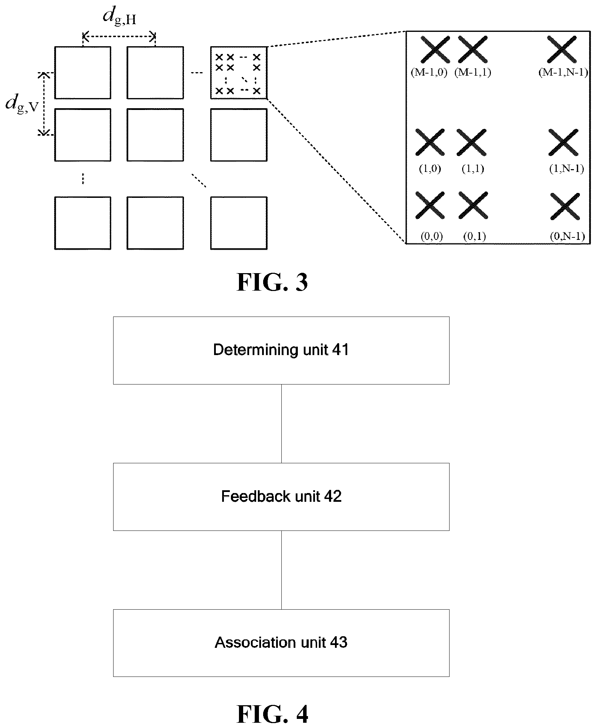

This embodiment provides an implementation of channel information quantization feedback. In a 5G mobile communication system, a large-scale antenna array is usually configured at a base station to improve the throughput of the network. Since the number of antennas may increase to 256 or more, the feedback overheads and UE processing complexity increase accordingly. Thus, a mainstream configuration of a large-scale antenna array is shown in FIG. 3.
In FIG. 3, the entire large-scale antenna array is divided into multiple antenna subarrays, each subarray includes evenly-spaced regular-rectangular dual-polarized antenna arrays, and the distance between the subarrays can be flexibly set. Therefore, intra-subarray antenna channel correlation is strong and can be quantized by 2D or 1D DFT vectors; inter-subarray antenna channel correlation is affected by subarray spacing and is not necessarily. In addition, in 5G, different antenna subarrays may be distributed on different transmission sites, and thus inter-subarray correlation cannot be simply modeled in the form of DFT vectors. A preferred manner is to report inter-subarray correlation in a manner of explicit feedback, that is, a terminal explicitly feeds back inter-subarray correlation information, for example, correlation coefficients, correlation matrixes, and feature vectors of the correlation matrixes. Therefore, the process of measuring and feeding back channel information by the terminal may be performed as described below.
In step 301, the base station configures reference signal resources for the terminal, where the reference signal resources include reference signal ports, reference signal time-domain resources, and reference signal frequency-domain resources; and notifies the terminal of the resource grouping information and related parameter configuration information, where each port group represents one subarray. In addition, the base station further configures a CSI calculation manner for the terminal according to the transmission manner to be used. Since QCL information can also be used for grouping of resources including ports, the indication manner of the grouping information may be associated with the QCL.

In step 302, the terminal measures the channel matrix, and calculates channel information according to the measurement result and channel information quantification feedback configuration information configured by the base station. The process of calculating the channel information by the terminal is divided into the substeps described below.

In substep 302-1, the terminal divides the measured channel matrix according to port grouping information configured by the base station.

In substep 302-2, the terminal uses, in each group, the port grouping information configured by the base station and configuration information about a precoding codebook to acquire the topological structure of the ports, beam group spacing information, oversampling factor information, etc., and generates the corresponding DFT codebook.

In substep 302-3, the terminal selects, from the codebook generated in each group, a precoding matrix and its corresponding precoding matrix indication information according to precoding indication information feedback configuration information. When the terminal selects the precoding indication information, it is assumed that different precoding matrixes are selected in different transmission manners. Therefore, the terminal needs to select the precoding indication information according to a CSI calculation manner. The CSI calculation manner includes a data transmission manner, a channel matrix calculation manner, an interference calculation manner and a precoding construction manner. In addition, when calculating the precoding indication, the terminal selects the corresponding number of precodings according to the number of precodings which require precoding indication information feedback in the precoding indication information feedback configuration information configured by the base station. On the other hand, the terminal needs to acquire broadband precoding indication information and/or subband precoding indication information according to the precoding indication information feedback configuration information. Meanwhile, the terminal calculates the number of channel layers according to layer configuration information. The layer configuration information may also be associated with the CSI calculation manner, such as the data transmission manner or the precoding construction manner.

In substep 302-4, according to the invention, after calculating the precoding of each group, the terminal reduces the original channel matrix to an equivalent channel matrix by using the obtained precoding, and calculates the correlation matrix of the equivalent channel matrix and the feature vector of the correlation matrix. Then, the obtained correlation matrix and/or correlation coefficient and/or feature vector information is quantized. The manner of quantization is to separately quantize the amplitude and phase of the preceding information to obtain M quantized amplitude coefficients and N quantized phase coefficients. The number of quantization states of the mth amplitude coefficient and the nth phase coefficient is determined by the base station configuration information. Then, independent coding or joint coding is performed for the amplitude coefficients and the phase coefficients separately according to the base station configuration information. In addition, the terminal obtains subband or broadband amplitude/phase coefficients according to the base station configuration information. Meanwhile, the terminal may further calculate the amplitude/phase coefficient of each layer according to the channel-layer configuration information.

In step 303, the terminal feeds back the broadband/subband amplitude/phase coefficients and broadband/subband precoding indication information according to the precoding indication information feedback configuration information and amplitude/phase feedback configuration information configured by the base station.

According to the preceding steps, the base station can efficiently acquire channel information suitable for the target transmission scheme and configured for base station antennas without incurring high CSI feedback overheads.

Embodiment two

This embodiment provides an implementation of configuration of channel information quantization feedback. In embodiment one, a base station notifies, by configuring channel information feedback parameters, a terminal how to perform CSI feedback. In the preceding solution, the base station needs to notify the terminal of a large amount of information. In a simpler manner, the base station transmits the information to the terminal through high-layer signaling. This is applicable to information about antenna configuration of the base station itself. After configured, such information generally does not change or changes after a long time. However, when the base station performs data transmission, some information needs to dynamically change. For example, the transmission manner needs to dynamically change. In this case, the base station needs to dynamically notify the terminal of some information, such as CSI calculation manner information. In addition, when the base station forms virtualized pilot ports by using precoded pilots, the precoding manner may dynamically change. Therefore, resource grouping information and other configuration information also need to be dynamically configured in some scenarios. In general, the base station may implement dynamic information configuration through physical-layer signaling. Therefore, the base station may notify the terminal of related configuration information through high-layer signaling or physical-layer signaling.

Embodiment three

This embodiment provides an implementation of configuration of channel information quantization feedback. In the present disclosure, it is needed to comprehensively feed back beam information in each port group and information about correlation between port groups. Beam information in each port group is fed back by vector quantization and incurs lower overheads. Information about correlation between port groups is fed back by element quantization and incurs higher overheads. In addition, the existing LTE contains only beam information, which may be transmitted periodically or aperiodically. Therefore, the present disclosure may fall back to the feedback manner of LTE by configuring only one set and setting the number of quantization states of amplitude and phase coefficients to 0. In addition, periodic feedback may be carried on a PUCCH and exists periodically, and thus has a higher requirement for low overheads; aperiodic feedback can be carried on only a PUSCH and exists when triggered, and thus has a lower requirement for low overheads. Therefore, it is feasible to configure intra-group beam feedback to be periodic or aperiodic, and configure inter-group amplitude and phase coefficient feedback to be only aperiodic.

Embodiment four

This embodiment provides an implementation of configuration of channel information quantization feedback. In an actual network configuration, a base station generally configures more antenna elements in a limited space by means of dual polarization, and correlation between different polarized antennas is extremely small. In addition, in a multi-point joint transmission system and a distributed antenna system, different antenna subarrays may be distributed on two sites that are far apart, and correlation between the antenna subarrays is also extremely small. Thus, when quantized channel information is configured, channel information feedback between subarrays between which correlation is weaker may be configured and simplified in the manner of configuring inter-group channel information relationship. For example, only phase difference and/or amplitude difference is configured between these subarrays. This simplifies the complexity of CSI calculation by a terminal. In addition, for dual-polarized antennas, antennas with the same position and different polarization directions correspond to the same or similar optimal beam directions. Therefore, corresponding subarrays may be configured to correspond to the same precoding codebook configuration and precoding indication information feedback configuration, or even the same precoding indication information. This further simplifies the complexity of CSI calculation by a terminal.

Embodiment five

This embodiment provides an implementation of configuration of channel information quantization feedback. A base station transmits a pilot sequence in two manners. One manner is through non-precoded pilots. In this manner, pilot ports are in a one-to-one correspondence with antenna ports and only one set of pilots are occupied. In this case, pilot resource grouping is pilot port grouping, and grouping information includes a pilot port grouping pattern and a topology of each group of ports. Another manner is through precoded pilots. In this manner, the base station virtualizes Q antenna ports into M pilot ports by precoding, and multiple sets of pilot resources may be occupied. In this case, pilot resource grouping includes pilot precoding manner grouping and pilot video resource grouping. When the direction of the analog beam also changes, pilot resource grouping further includes grouping of the time-domain symbols occupied by the pilots. In addition, since QCL information includes pilot port grouping information and pilot resource and beam grouping information in 5G. Therefore, in the two manners, the corresponding grouping information can both be associated with the QCL information so as to be notified.

Embodiment six

This embodiment provides an implementation of channel information quantization feedback. In embodiment one, the terminal acquires information about the channel feedback parameter through base station signaling configuration. In this manner, the base station has a greater decision right. In fact, the base station may not fully understand the channel characteristics. Therefore, the manner of using the base station to configure information is not optimal. On the other hand, after the terminal measures the channel according to the reference signal, the channel characteristics can be better understood. Therefore, the terminal can acquire some information through the channel measurement result by itself. For example, the terminal can acquire port grouping information through the channel measurement result by itself. Through channel measurement, the terminal can determine correlation between which ports is strong and correlation between which ports is weak. The terminal can classify ports between which correlation is strong into the same group. Correlation between different groups of ports is weak. In this way, the terminal can gain a better port grouping manner. In addition, the terminal can acquire port group relationship configuration information and amplitude/phase configuration information by itself by analyzing the channel measurement result. Compared with base station configuration, such manner enables the terminal to acquire information more in line with the channel characteristics. After acquiring the information according to the channel measurement result, the terminal needs to report the information to the base station through feedback. The information may be reported in two manners: through a physical layer channel or through high-layer signaling.

Embodiment seven

This embodiment provides an implementation of channel information quantization feedback. This embodiment provides a method for channel information quantization feedback based on a downloadable codebook. The so-called downloadable codebook is a large codebook matrix formed from elements in CSI (in which a base station is interested) enumerated by the base station and then sent to a terminal by the base station according to the downlink data transmission manner. After the terminal downloads the codebook, the terminal calculates CSI according to the codebook. The implementation of the downloadable codebook is as follows:

In step 701, the base station configures the downloadable codebook and codebook data resource information for the terminal. Codebook data resources are downlink data resources used by the base station to carry each element in the codebook. The configured codebook data resource information includes the starting time-frequency resource position of the codebook data resources, the size of the codebook matrix, whether the CSI associated with the codebook data resources is complete CSI, and if it is partial CSI, which part of the CSI is associated with: associated with precoding indication information or amplitude/phase information. In addition, when a protocol codebook and the downloadable codebook coexist, the base station needs to configure, through the CSI calculation manner, whether the terminal uses the downloadable codebook to feedback CSI or uses the protocol codebook to feedback CSI.

In step 702, the base station sends, according to configuration, the codebook matrix to the terminal through a downlink data channel, and the terminal receives, according to configuration, the codebook matrix sent by the base station.

In step 703, the terminal feeds back the corresponding CSI in the received codebook to the base station according to the configuration of the base station, the received codebook data, and the result of the channel measurement. If the base station configures the terminal to feed back the complete CSI through the downloadable codebook, then all CSI information is calculated through the downloadable codebook. If the base station configures the terminal to feed back the partial CSI through the downloadable codebook, then the terminal calculates, through the downloadable codebook, the partial CSI (for example, precoding indication information, amplitude information and phase information) with which the codebook data resources are associated and feeds back other CSI according to the protocol codebook.

In this way, the most flexible CSI feedback configuration can be achieved with small standard impacts.

Embodiment eight

This embodiment provides an implementation of precoding codebook configuration. In the present disclosure, when the values of M and N are set to 0, a terminal feeds back only precoding codebook indication information. In the existing LTE two-stage codebook system, the precoding codebook is implemented by an oversampled DFT codebook. When higher codebook accuracy is required, the usual approach is to increase the oversampling factor, but increasing the oversampling factor results in an increase in W1 feedback overheads, detrimental to periodic feedback. Therefore, for the precoding indication information of a periodic feedback DFT codebook, a more reasonable enhancement manner is multi-level PMI (precoding indication information) feedback. In general, the structure of PMI is as follows:

$$W = W_1^{(K)} \cdots W_1^{(1)} W_2$$

$W_2$ contains beam selection and polarization phase information. $W_1^{(K)} \cdots W_1^{(1)}$ contains beam information. $W_1^{(1)}$ contains the most basic beam information, for example, a DFT vector without oversampling, that is, first-level beam information. $W_1^{(K)} \cdots W_1^{(2)}$ is the result of K - 1 levels of fine adjustment of the first-level beam information. Specifically, the kth-level beam is the result of phase rotation of the (K - 1)th- level beam, that is,

$$W_1^{(k)} = diag(\exp(j\frac{0}{N}p_k),...,\exp(j\frac{N-1}{N}p_k))$$

k = 2, ..., K. N denotes the number of antenna ports. $p_k$ denotes the phase rotation factor. More specifically,

$$p_k = \frac{m_k p}{O_k}$$

. $O_k$ is configurable and denotes the minimum unit of phase rotation at level k. If $k_1 > k_2$, $O_{k1} \geq O_{k2}$. p is a fixed value, which can be determined by the terminal processing capability or the number of antenna ports. $m_k$ is a positive or negative integer and is the kth-level feedback information. The first level feeds back beam selection information in the first-level coarse beam information. The value of $m_k$ is fed back from the second level to the kth level. The frequency-domain granularity of the feedback is gradually reduced, and the period of the feedback is also gradually reduced. Through such multi-level beam information selection and appropriate frequency-domain granularity and periodic configuration, burst feedback pressure can be avoided and high DFT feedback accuracy can be achieved with the overall feedback overheads unchanged.

FIG. 4 is structure diagram one of an apparatus for channel information quantification feedback according to an embodiment of the present disclosure. As shown in FIG. 4, the apparatus includes:

a determining unit 41, configured to determine a quantification feedback parameter of channel information; and
a feedback unit 42, configured to feed back quantized channel information according to the quantification feedback parameter of channel information, where the channel information includes at least one of the following: information about M amplitude coefficients and information about N phase coefficients, where M≥0 and N≥0; and channel information subsets corresponding to L resource groups, where L≥1, where the kth channel information subset among the channel information subsets includes $B_k$ pieces of precoding indication information, where L≥ k≥1 and $B_k \geq 0$.

In this embodiment of the present disclosure, the quantification feedback parameter of channel information includes at least one of the following:

configuration information about channel information calculation manner;
resource grouping information;
configuration information about a precoding codebook;
configuration information about precoding indication feedback;
feedback configuration information about amplitude coefficients;
feedback configuration information about phase coefficients;
configuration information about a relationship between the channel information of different resource groups; and
layer configuration information.

In this embodiment of the present disclosure, the configuration information about channel information calculation manner includes at least one of the following: a data transmission manner, a channel matrix calculation manner, an interference calculation manner, a precoding construction manner, and acquisition by using a codebook data resource.

In this embodiment of the present disclosure, the resource grouping information includes at least one of the following: a value of L, the number of resources included in each resource group, and resource allocation information of each resource group.

In this embodiment of the present disclosure, the apparatus further includes: an association unit, which is configured to associate the resource grouping information with quasi-common location (QCL) information.

In this embodiment of the present disclosure, the apparatus further includes: an association unit 43, which is configured to associate the kth piece of configuration information about a precoding codebook with configuration information about a precoding codebook in the kth resource group.

In this embodiment of the present disclosure, the configuration information about a precoding codebook in the kth resource group is associated with the resource grouping information; and

the configuration information about a precoding codebook in the kth resource group is associated with the resource grouping information; and the configuration information about a precoding codebook in the kth resource group is associated with resource allocation information in the kth resource group,

where the configuration information about a precoding codebook in the kth resource group includes dimension information about a precoding matrix and/or information about the number of precoding matrixes in a codebook.

In this embodiment of the present disclosure, the apparatus further includes: an association unit 43, which is configured to associate the kth piece of configuration information about precoding indication feedback with precoding feedback configuration information in the kth resource group.

In this embodiment of the present disclosure, the precoding feedback configuration information in the kth resource group includes the number of pieces of precoding indication information and/or a frequency-domain granularity of the precoding indication information.

In this embodiment of the present disclosure, the feedback unit 42 is further configured to feed back a physical channel of precoding indication information in the kth resource group, where the precoding indication information in the kth resource group has a periodic feedback mode and an aperiodic feedback mode as well as a time-domain position of precoding indication information feedback in the kth resource group.

In this embodiment of the present disclosure, the apparatus further includes: an association unit 43, which is configured to associate feedback configuration information about the mth amplitude coefficient with a channel correlation between the kith resource group and the $k_2$th resource group, where $M \geq m \geq 0$.

In this embodiment of the present disclosure, feedback configuration information of the mth amplitude coefficient includes the number of quantized feedback states of the mth amplitude coefficient, where the feedback configuration information about amplitude coefficients includes each amplitude coefficient using the same number of quantized feedback states, where $M \geq m \geq 0$.

In this embodiment of the present disclosure, the feedback configuration information about amplitude coefficients includes at least one of the following information: a frequency-domain granularity of amplitude coefficient feedback , an aperiodic feedback mode of the amplitude coefficient, and coding manner information of multiple amplitude coefficients, where the coding manner information includes at least one of the following: independent coding and joint coding.

In this embodiment of the present disclosure, the apparatus further includes: an association unit 43, which is configured to associate the feedback configuration information about a nth phase coefficient with a channel correlation between the kith resource group and the $k_2$th resource group, where $N \geq n \geq 0$.

In this embodiment of the present disclosure, feedback configuration information of the nth phase coefficient includes the number of quantized feedback states of the nth phase coefficient, where the feedback configuration information about phase coefficients includes each phase coefficient using the same number of quantized feedback states, where $N \geq n \geq 0$.

In this embodiment of the present disclosure, the feedback configuration information about phase coefficients includes at least one of the following information: a frequency-domain granularity of phase coefficient feedback, an aperiodic feedback mode of the phase coefficient, and coding manner information of multiple phase coefficients, where the coding manner information includes at least one of the following: independent coding and joint coding.

In this embodiment of the present disclosure, the configuration information about a relationship between the channel information of different resource groups includes at least one of the following: the kith resource group and the $k_2$th resource group using same precoding codebook configuration, the kith resource group and the $k_2$th resource group using same precoding indication information feedback configuration, the kith resource group and the $k_2$th resource group using same precoding indication information, only a phase difference and/or an amplitude difference existing between precoding matrixes indicated by precoding indication information fed back by the kith resource group and the $k_2$th resource group, and whether an amplitude coefficient and/or a phase coefficient is fed back between the kith resource group and the $k_2$th resource group.

In this embodiment of the present disclosure, the layer configuration information includes information about the supported minimum and/or maximum number of layers.

In this embodiment of the present disclosure, the apparatus further includes: an association unit 43, which is configured to associate the layer configuration information with the configuration information about channel information calculation manner,

where a channel information calculation manner includes at least one of the following: a data transmission manner and association of a precoding construction manner.

In this embodiment of the present disclosure, the layer configuration information includes different layers feeding back the same amplitude coefficient and/or phase coefficient.

In this embodiment of the present disclosure, a resource in each of the resource groups includes at least one of:

a pilot port associated with the channel information;

a pilot time-frequency resource associated with the channel information;

a pilot time-domain symbol associated with the channel information; and

a pilot precoding manner associated with the channel information.

In this embodiment of the present disclosure, the determining unit 41 is configured to determine the quantification feedback parameter of channel information in at least one of the following manners:

a high-layer signaling configured by a base station;

a physical-layer signaling configured by the base station; and

measurement of channel characteristics.

In this embodiment of the present disclosure, the feedback unit 42 is further configured to report the determined quantification feedback parameter of channel information to a base station through a physical-layer channel or through high-layer signaling.

It is to be understood by those skilled in the art that implementation of functions of various units in the apparatus for channel information quantification feedback shown FIG. 4 may be understood with reference to the description of the preceding method for channel information quantification feedback. The functions of the various units in the apparatus for channel information quantification feedback shown in FIG. 4 may be implemented by one or more programs running on a processor or by one or more specific logic circuits.

In practical use, the functions of the various units in the apparatus for channel information quantification feedback may be implemented by a Central Processing Unit (CPU), a Microprocessor Unit (MPU), a Digital Signal Processor (DSP) or the like in the apparatus for channel information quantification feedback.

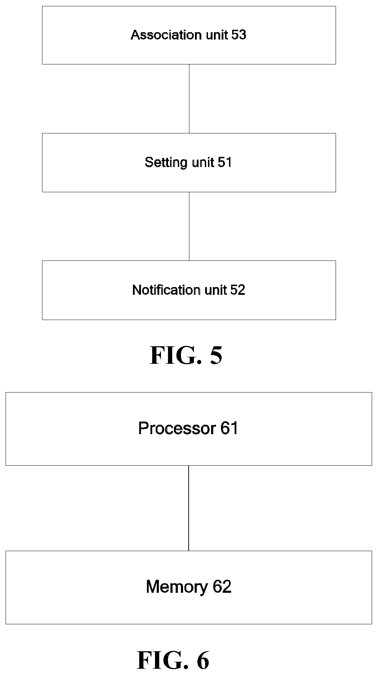

FIG. 5 is structure diagram two of an apparatus for channel information quantification feedback according to an embodiment of the present disclosure. As shown in FIG. 5, the apparatus includes:

a setting unit 51, configured to set a quantification feedback parameter of channel information; and

a notification unit 52, configured to notify the quantification feedback parameter of channel information to a terminal, where the channel information includes at least one of the following: information about M amplitude coefficients and information about N phase coefficients, where $M \geq 0$ and $N \geq 0$; and channel information subsets corresponding to L resource groups, where $L \geq 1$, where the kth channel information subset among the channel information subsets includes $B_k$ pieces of precoding indication information, where $L \geq k \geq 1$ and $B_k \geq 0$.

In this embodiment of the present disclosure, the quantification feedback parameter of channel information includes at least one of the following:

configuration information about channel information calculation manner;

resource grouping information;

configuration information about a precoding codebook;

configuration information about precoding indication feedback;

feedback configuration information about amplitude coefficients;

feedback configuration information about phase coefficients;

configuration information about a relationship between the channel information of different resource groups; and

layer configuration information.

In this embodiment of the present disclosure, the configuration information about channel information calculation manner includes at least one of the following: a data transmission manner, a channel matrix calculation manner, an interference calculation manner, a precoding construction manner, and acquisition by using a codebook data resource.

In this embodiment of the present disclosure, the resource grouping information includes at least one of the following: a value of L, the number of resources included in each resource group, and resource allocation information of each resource group.

In this embodiment of the present disclosure, the apparatus further includes: an association unit 53, configured to associate the resource grouping information with quasi-common location (QCL) information.

In this embodiment of the present disclosure, the apparatus further includes: an association unit 53, configured to associate the kth piece of configuration information about a precoding codebook with configuration information about a precoding codebook in the kth resource group.

In this embodiment of the present disclosure, the configuration information about a precoding codebook in the kth resource group is associated with the resource grouping information; and

the configuration information about a precoding codebook in the kth resource group is associated with the resource grouping information; and the configuration information about a precoding codebook in the kth resource group is associated with resource allocation information in the kth resource group,

where the configuration information about a precoding codebook in the kth resource group includes dimension information about a precoding matrix and/or information about the number of precoding matrixes in a codebook.

In this embodiment of the present disclosure, the apparatus further includes: an association unit 53, configured to associate the kth piece of configuration information about precoding indication feedback with precoding feedback configuration information in the kth resource group.

In this embodiment of the present disclosure, the precoding feedback configuration information in the kth resource group includes the number of pieces of precoding indication information and/or a frequency-domain granularity of the precoding indication information.

In this embodiment of the present disclosure, the apparatus further includes a feedback unit, which is further configured to feed back a physical channel of precoding indication information in the kth resource group, where the precoding indication information in the kth resource group has a periodic feedback mode and an aperiodic feedback mode as well as a time-domain position of precoding indication information feedback in the kth resource group.

In this embodiment of the present disclosure, the apparatus further includes: an association unit 53, which is configured to associate feedback configuration information about the mth amplitude coefficient with a channel correlation between the kith resource group and the $k_2$th resource group, where $M \geq m \geq 0$.

In this embodiment of the present disclosure, feedback configuration information of the mth amplitude coefficient includes the number of quantized feedback states of the mth amplitude coefficient, where the feedback configuration information about amplitude coefficients includes each amplitude coefficient using the same number of quantized feedback states, where $M \geq m \geq 0$.

In this embodiment of the present disclosure, the feedback configuration information about amplitude coefficients includes at least one of the following information: a frequency-domain granularity of amplitude coefficient feedback, an aperiodic feedback mode of the amplitude coefficient, and coding manner information of multiple amplitude coefficients, where the coding manner information includes at least one of the following: independent coding and joint coding.

In this embodiment of the present disclosure, the apparatus further includes: an association unit 53, configured to associate the feedback configuration information about a nth phase coefficient with a channel correlation between the kith resource group and the $k_2$th resource group, where $N \geq n \geq 0$.

In this embodiment of the present disclosure, feedback configuration information of the nth phase coefficient includes the number of quantized feedback states of the nth phase coefficient, where the feedback configuration information about phase coefficients includes each phase coefficient using the same number of quantized feedback states, where $N \geq n \geq 0$.

In this embodiment of the present disclosure, the feedback configuration information about phase coefficients includes at least one of the following information: a frequency-domain granularity of phase coefficient feedback, an aperiodic feedback mode of the phase coefficient, and coding manner information of multiple phase coefficients, where the coding manner information includes at least one of the following: independent coding and joint coding.

In this embodiment of the present disclosure, the configuration information about a relationship between the channel information of different resource groups includes at least one of the following: the kith resource group and the $k_2$th resource group using same precoding codebook configuration, the kith resource group and the $k_2$th resource group using same precoding indication information feedback configuration, the kith resource group and the $k_2$th resource group using same precoding indication information, only a phase difference and/or an amplitude difference existing between precoding matrixes indicated by precoding indication information fed back by the kith resource group and the $k_2$th resource group, and whether an amplitude coefficient and/or a phase coefficient is fed back between the kith resource group and the $k_2$th resource group.

In this embodiment of the present disclosure, the layer configuration information includes information about the supported minimum and/or maximum number of layers.

In this embodiment of the present disclosure, the apparatus further includes: an association unit 53, configured to associate the layer configuration information with the configuration information about channel information calculation manner,

where a channel information calculation manner includes at least one of the following: a data transmission manner and association of a precoding construction manner.

In this embodiment of the present disclosure, the layer configuration information includes different layers feeding back the same amplitude coefficient and/or phase coefficient.

In this embodiment of the present disclosure, a resource in each of the resource groups includes at least one of:

a pilot port associated with the channel information;

a pilot time-frequency resource associated with the channel information;

a pilot time-domain symbol associated with the channel information; and

a pilot precoding manner associated with the channel information.

In this embodiment of the present disclosure, the notification unit 52 is configured to notify the quantification feedback parameter of channel information to the terminal in at least one of the following manners:

a high-layer signaling; and

a physical-layer signaling.

It is to be understood by those skilled in the art that implementation of functions of various units in the apparatus for channel information quantification feedback shown FIG. 5 may be understood with reference to the description of the preceding method for channel information quantification feedback. The functions of the various units in the apparatus for channel information quantification feedback shown in FIG. 5 may be implemented by one or more programs running on a processor or by one or more specific logic circuits.

In practical use, the functions of the various units in the apparatus for channel information quantification feedback may be implemented by a Central Processing Unit (CPU), a Microprocessor Unit (MPU), a Digital Signal Processor (DSP) or the like in the apparatus for channel information quantification feedback.

FIG. 6 is a structure diagram of an electronic device according to an embodiment of the present disclosure. As shown in FIG. 6, the electronic device includes: a processor 61; and a memory 62, where the memory 62 stores executable instructions, and when the executable instructions are executed by the processor 61, the processor 61 executes the method for channel information quantification feedback according to any one of embodiments of the present disclosure.

It is to be understood by those skilled in the art that embodiments of the present disclosure may be provided as a method, a system or a computer program product. Therefore, the present disclosure may take the form of a hardware embodiment, a software embodiment, or an embodiment combining software and hardware. The present disclosure may take the form of a computer program product implemented in one or more computer-usable storage media (including, but not limited to, a disk memory and an optical memory) that includes computer-usable program codes.

The present disclosure is described with reference to flowcharts and/or block diagrams of the method, apparatus (system) and computer program product according to embodiments of the present disclosure. It is to be understood that the computer program instructions can be used to implement each flow and/or block in the flowcharts and/or block diagrams and a combination of flows and/or blocks in the flowcharts and/or block diagrams. These computer program instructions can be provided to a processor of a general purpose computer, special purpose computer, embedded processor, or another programmable data processing device to produce a machine, so as to enable instructions executed by a processor of a computer or another programmable data processing device to generate an apparatus for implementing the functions specified in one or more flows in the flowcharts and/or one or more blocks in the block diagrams.

These computer program instructions can also be stored in a computer-readable memory that can direct a computer or another programmable data processing device to operate in a particular manner, so that the instructions stored in the computer-readable memory produce an article of manufacture including an instruction apparatus. The instruction apparatus implements the functions specified in one or more flows in the flowcharts and/or one or more blocks in the block diagrams.

These computer program instructions can also be loaded onto a computer or another programmable data processing device, so that a series of operating steps are performed on a computer or another programmable device, and the instructions executed on the computer or another programmable device provide steps for implementing the functions specified in one or more flows in the flowcharts and/or one or more blocks in the block diagrams.

Correspondingly, an embodiment of the present disclosure provides a storage medium, which is configured to store computer-executable instructions for executing the method for channel information quantification feedback according to any one of embodiments of the present disclosure.

The preceding are only preferred embodiments of the present disclosure and are not intended to limit the scope of the present disclosure, which is defined by the appended claims.

**Claims**

1. A method for channel information quantification feedback, comprising:

receiving (101), by a terminal, a quantification feedback parameter of channel information from a base station, and feeding back (102) quantized channel information according to the quantification feedback parameter of channel information, wherein the channel information comprises:

channel information subsets corresponding to L resource groups, wherein L≥1, wherein a kth channel information subset among the channel information subsets comprises $B_k$ pieces of precoding indication information, wherein L≥ k≥1 and $B_k$≥ 0; and
information about M amplitude coefficients and information about N phase coefficients, wherein M≥0 and N≥0, and wherein M and N cannot be both zero,

wherein the information about M amplitudes and the information about N phase coefficients are obtained by reducing an original channel matrix to an equivalent channel matrix by using the obtained precoding of each group,
calculating a correlation matrix of the equivalent channel matrix and a feature vector of the correlation matrix, and quantizing amplitude coefficients and phase coefficients of at least one of the correlation matrix, correlation coefficient or the feature vector.

2. The method for channel information quantification feedback according to claim 1, wherein the quantification feedback parameter of channel information comprises at least one of the following:

configuration information about channel information calculation manner;
resource grouping information;
configuration information about precoding codebooks;
configuration information about precoding indication feedback
feedback configuration information about amplitude coefficients;
feedback configuration information about phase coefficients;
configuration information about a relationship between the channel information of different resource groups; or
layer configuration information.

3. The method for channel information quantification feedback according to claim 2, wherein the configuration information about channel information calculation manner comprises at least one of the following: a data transmission manner, a channel matrix calculation manner, an interference calculation manner, a precoding construction manner, and acquisition by using a codebook data resource.

4. The method for channel information quantification feedback according to claim 2, wherein the resource grouping information comprises at least one of the following: a value of L, a total number of resources comprised in each resource group, and resource allocation information of each resource group.

5. The method for channel information quantification feedback according to claim 2, further comprising: associating the resource grouping information with quasi-common location (QCL) information.

6. The method for channel information quantification feedback according to claim 2, further comprising: associating a kth piece of configuration information about precoding codebooks with configuration information about the precoding codebook in a kth resource group.

7. The method for channel information quantification feedback according to claim 6, wherein

the configuration information about the precoding codebook in the kth resource group is associated with the resource grouping information; and
the configuration information about the precoding codebook in the kth resource group is associated with resource allocation information of the kth resource group,

wherein the configuration information about the precoding codebook in the kth resource group comprises dimension information about a precoding matrix and/or information about a total number of precoding matrixes in the codebook.

8. A method for channel information quantification feedback, comprising:

setting (201), by a base station, a quantification feedback parameter of channel information, and notifying (202) the quantification feedback parameter of channel information to a terminal, wherein the channel information fed back by the terminal comprises:

channel information subsets corresponding to L resource groups, wherein $L \geq 1$, wherein a kth channel information subset among the channel information subsets comprises $B_k$ pieces of precoding indication information, wherein $L \geq k \geq 1$ and $B_k \geq 0$; and
information about M amplitude coefficients and information about N phase coefficients, wherein $M \geq 0$ and $N \geq 0$, and wherein M and N cannot be both zero,

wherein the information about M amplitudes and the information about N phase coefficients are obtained by reducing an original channel matrix to an equivalent channel matrix by using the obtained precoding of each group, calculating a correlation matrix of the equivalent channel matrix and a feature vector of the correlation matrix, and quantizing amplitude coefficients and phase coefficients of at least one of the correlation matrix, correlation coefficient or the feature vector.

9. The method for channel information quantification feedback according to claim 8, wherein the quantification feedback parameter of channel information comprises at least one of the following:

configuration information about channel information calculation manner;
resource grouping information;
configuration information about precoding codebooks;
configuration information about precoding indication feedback feedback configuration information about amplitude coefficients;
feedback configuration information about phase coefficients;
configuration information about a relationship between the channel information of different resource groups; or
layer configuration information.

10. The method for channel information quantification feedback according to claim 9, wherein the configuration information about channel information calculation manner comprises at least one of the following: a data transmission manner, a channel matrix calculation manner, an interference calculation manner, a precoding construction manner, and acquisition by using a codebook data resource.

11. The method for channel information quantification feedback according to claim 9, wherein the resource grouping information comprises at least one of the following: a value of L, a total number of resources comprised in each resource group, and resource allocation information of each resource group.

12. The method for channel information quantification feedback according to claim 9, further comprising: associating the resource grouping information with quasi-common location (QCL) information.

13. The method for channel information quantification feedback according to claim 9, further comprising: associating a kth piece of configuration information about precoding codebooks with configuration information about the precoding codebook in a kth resource group.

14. A terminal apparatus for channel information quantification feedback, comprising:

a determining
unit (41), configured to receive a quantification feedback parameter of channel information from a base station; and
a feedback unit (42), configured to feed back quantized channel information according to the quantification feedback parameter of channel information, wherein the channel information comprises:

channel information subsets corresponding to L resource groups, wherein L≥1, wherein a kth channel information subset among the channel information subsets comprises $B_k$ pieces of precoding indication information, wherein L≥k≥ 1 and $B_k$≥0; and

information about M amplitude coefficients and information about N phase coefficients, wherein M≥0 and N≥0, and wherein M and N cannot be both zero,

wherein the information about M amplitudes and the information about N phase coefficients are obtained by reducing an original channel matrix to an equivalent channel matrix by using the obtained precoding of each group, calculating a correlation matrix of the equivalent channel matrix and a feature vector of the correlation matrix, and quantizing amplitude coefficients and phase coefficients of at least one of the correlation matrix, correlation coefficient or the feature vector.

15. A base station apparatus for channel information quantification feedback, comprising:

a setting unit (51), configured to set a quantification feedback parameter of channel information; and a notification unit (52), configured to notify the quantification feedback parameter of channel information to a terminal, wherein the channel information fed back by the terminal comprises

channel information subsets corresponding to L resource groups, wherein L≥1, wherein a kth channel information subset among the channel information subsets comprises $B_k$ pieces of precoding indication information, wherein L≥k≥1 and $B_k$≥0; and

information about M amplitude coefficients and information about N phase coefficients, wherein M≥0 and N≥0, and wherein M and N cannot be both zero,

wherein the information about M amplitudes and the information about N phase coefficients are obtained by reducing an original channel matrix to an equivalent channel matrix by using the obtained precoding of each group, calculating a correlation matrix of the equivalent channel matrix and a feature vector of the correlation matrix, and quantizing amplitude coefficients and phase coefficients of at least one of the correlation matrix, correlation coefficient or the feature vector.

**Patentansprüche**

1. Verfahren für eine Kanalinformationsquantifizierungsrückmeldung, das Folgendes umfasst:
Empfangen (101) eines Quantifizierungsrückmeldungsparameters von Kanalinformationen durch ein Endgerät von einer Basisstation und Rückmelden (102) von quantisierten Kanalinformationen gemäß dem Quantifizierungsrückmeldungsparameter von Kanalinformationen, wobei die Kanalinformationen Folgendes umfassen:

Kanalinformationsuntersätze, die L Ressourcengruppen entsprechen, wobei L≥1, wobei ein k-ter Kanalinformationsuntersatz der Kanalinformationsuntersätze $B_k$ Teile von Vorcodierungsanzeigeinformationen umfasst, wobei L≥k≥1 und $B_k$≥0; und
Informationen über M Amplitudenkoeffizienten und Informationen über N Phasenkoeffizienten, wobei M≥0 und N≥0, und wobei M und N nicht beide null sein können,
wobei die Informationen über M Amplituden und die Informationen über N Phasenkoeffizienten durch Reduzieren einer ursprünglichen Kanalmatrix zu einer äquivalenten Kanalmatrix unter Verwendung der erhaltenen Vorcodierung jeder Gruppe erhalten werden,
Berechnen einer Korrelationsmatrix der äquivalenten Kanalmatrix und eines Merkmalsvektors der Korrelationsmatrix und Quantisieren von Amplitudenkoeffizienten und Phasenkoeffizienten von mindestens einem der Korrelationsmatrix, eines Korrelationskoeffizienten oder des Merkmalsvektors.

2. Verfahren für eine Kanalinformationsquantifizierungsrückmeldung nach Anspruch 1, wobei der Quantifizierungsrückmeldungsparameter von Kanalinformationen mindestens eines von Folgendem umfasst:

Auslegungsinformationen über eine Kanalinformationsberechnungsweise;
Ressourcengruppierungsinformationen;
Auslegungsinformationen über Vorcodierungscodebücher;
Auslegungsinformationen über eine Vorcodierungsanzeigerückmeldung
Rückmeldungsauslegungsinformationen über Amplitudenkoeffizienten;

Rückmeldungsauslegungsinformationen über Phasenkoeffizienten;
Auslegungsinformationen über eine Beziehung zwischen den Kanalinformationen von verschiedenen Ressourcengruppen; oder
Schichtauslegungsinformationen.

3. Verfahren für eine Kanalinformationsquantifizierungsrückmeldung nach Anspruch 2, wobei die Auslegungsinformationen über eine Kanalinformationsberechnungsweise mindestens eines von Folgendem umfassen: eine Datenübertragungsweise, eine Kanalmatrixberechnungsweise, eine Interferenzberechnungsweise, eine Vorcodierungskonstruktionsweise und Erfassung unter Verwendung von einer Codebuchdatenressource.

4. Verfahren für eine Kanalinformationsquantifizierungsrückmeldung nach Anspruch 2, wobei die Ressourcengruppierungsinformationen mindestens eines von Folgendem umfassen: einen Wert von L, eine Gesamtzahl von Ressourcen, die in jeder Ressourcengruppe umfasst sind, und Ressourcenzuteilungsinformationen jeder Ressourcengruppe.

5. Verfahren für eine Kanalinformationsquantifizierungsrückmeldung nach Anspruch 2, das ferner Folgendes umfasst:
Verknüpfen der Ressourcengruppierungsinformationen mit Quasi-Common-Location(QCL)-Informationen.

6. Verfahren für eine Kanalinformationsquantifizierungsrückmeldung nach Anspruch 2, das ferner Folgendes umfasst:
Verknüpfen eines k-ten Teils von Auslegungsinformationen über Vorcodierungscodebücher mit Auslegungsinformationen über das Vorcodierungscodebuch in einer k-ten Ressourcengruppe.

7. Verfahren für eine Kanalinformationsquantifizierungsrückmeldung nach Anspruch 6, wobei

die Auslegungsinformationen über das Vorcodierungscodebuch der k-ten Ressourcengruppe mit den Ressourcengruppierungsinformationen verknüpft sind; und
die Auslegungsinformationen über das Vorcodierungscodebuch der k-ten Ressourcengruppe mit Ressourcenzuteilungsinformationen der k-ten Ressourcengruppe verknüpft sind,
wobei die Auslegungsinformationen über das Vorcodierungscodebuch der k-ten Ressourcengruppe Dimensionsinformationen über eine Vorcodierungsmatrix und/oder Informationen über eine Gesamtzahl von Vorcodierungsmatrices im Codebuch umfassen.

8. Verfahren für eine Kanalinformationsquantifizierungsrückmeldung, das Folgendes umfasst:
Einstellen (201) eines Quantifizierungsrückmeldungsparameters von Kanalinformationen durch eine Basisstation und Benachrichtigen (202) eines Endgeräts über den Quantifizierungsrückmeldungsparameter von Kanalinformationen, wobei die vom Endgerät rückgemeldeten Kanalinformationen Folgendes umfassen:

Kanalinformationsuntersätze, die L Ressourcengruppen entsprechen, wobei $L{\geq}1$, wobei ein k-ter Kanalinformationsuntersatz der Kanalinformationsuntersätze $B_k$ Teile von Vorcodierungsanzeigeinformationen umfasst, wobei $L{\geq}k{\geq}1$ und $B_k{\geq}0$; und
Informationen über M Amplitudenkoeffizienten und Informationen über N Phasenkoeffizienten, wobei $M{\geq}0$ und $N{\geq}0$, und wobei M und N nicht beide null sein können,
wobei die Informationen über M Amplituden und die Informationen über N Phasenkoeffizienten durch Reduzieren einer ursprünglichen Kanalmatrix zu einer äquivalenten Kanalmatrix unter Verwendung der erhaltenen Vorcodierung jeder Gruppe erhalten werden,
Berechnen einer Korrelationsmatrix der äquivalenten Kanalmatrix und eines Merkmalsvektors der Korrelationsmatrix und Quantisieren von Amplitudenkoeffizienten und Phasenkoeffizienten von mindestens einem der Korrelationsmatrix, eines Korrelationskoeffizienten oder des Merkmalsvektors.

9. Verfahren für eine Kanalinformationsquantifizierungsrückmeldung nach Anspruch 8, wobei der Quantifizierungsrückmeldungsparameter von Kanalinformationen mindestens eines von Folgendem umfasst:

Auslegungsinformationen über eine Kanalinformationsberechnungsweise;
Ressourcengruppierungsinformationen;
Auslegungsinformationen über Vorcodierungscodebücher;
Auslegungsinformationen über eine Vorcodierungsanzeigerückmeldung
Rückmeldungsauslegungsinformationen über Amplitudenkoeffizienten;
Rückmeldungsauslegungsinformationen über Phasenkoeffizienten;

Auslegungsinformationen über eine Beziehung zwischen den Kanalinformationen von verschiedenen Ressourcengruppen; oder
Schichtauslegungsinformationen.

**10.** Verfahren für eine Kanalinformationsquantifizierungsrückmeldung nach Anspruch 9, wobei die Auslegungsinformationen über eine Kanalinformationsberechnungsweise mindestens eines von Folgendem umfassen: eine Datenübertragungsweise, eine Kanalmatrixberechnungsweise, eine Interferenzberechnungsweise, eine Vorcodierungskonstruktionsweise und Erfassung unter Verwendung von einer Codebuchdatenressource.

**11.** Verfahren für eine Kanalinformationsquantifizierungsrückmeldung nach Anspruch 9, wobei die Ressourcengruppierungsinformationen mindestens eines von Folgendem umfassen: einen Wert von L, eine Gesamtzahl von Ressourcen, die in jeder Ressourcengruppe umfasst sind, und Ressourcenzuteilungsinformationen jeder Ressourcengruppe.

**12.** Verfahren für eine Kanalinformationsquantifizierungsrückmeldung nach Anspruch 9, das ferner Folgendes umfasst: Verknüpfen der Ressourcengruppierungsinformationen mit Quasi-Common-Location(QCL)-Informationen.

**13.** Verfahren für eine Kanalinformationsquantifizierungsrückmeldung nach Anspruch 9, das ferner Folgendes umfasst: Verknüpfen eines k-ten Teils von Auslegungsinformationen über Vorcodierungscodebücher mit Auslegungsinformationen über das Vorcodierungscodebuch in einer k-ten Ressourcengruppe.

**14.** Endgerätevorrichtung für eine Kanalinformationsquantifizierungsrückmeldung, die Folgendes umfasst:

eine Bestimmungseinheit (41), die dazu ausgelegt ist, einen Quantifizierungsrückmeldungsparameter von Kanalinformationen von einer Basisstation zu empfangen; und
eine Rückmeldeeinheit (42), die dazu ausgelegt ist, quantisierte Kanalinformationen gemäß dem Quantifizierungsrückmeldungsparameter von Kanalinformationen rückzumelden, wobei die Kanalinformationen Folgendes umfassen:

Kanalinformationsuntersätze, die L Ressourcengruppen entsprechen, wobei $L \geq 1$, wobei ein k-ter Kanalinformationsuntersatz der Kanalinformationsuntersätze $B_k$ Teile von Vorcodierungsanzeigeinformationen umfasst, wobei $L \geq k \geq 1$ und $B_k \geq 0$; und
Informationen über M Amplitudenkoeffizienten und Informationen über N Phasenkoeffizienten, wobei $M \geq 0$ und $N \geq 0$ und wobei M und N nicht beide null sein können,
wobei die Informationen über M Amplituden und die Informationen über N Phasenkoeffizienten durch Reduzieren einer ursprünglichen Kanalmatrix zu einer äquivalenten Kanalmatrix unter Verwendung der erhaltenen Vorcodierung jeder Gruppe erhalten werden,
Berechnen einer Korrelationsmatrix der äquivalenten Kanalmatrix und eines Merkmalsvektors der Korrelationsmatrix und Quantisieren von Amplitudenkoeffizienten und Phasenkoeffizienten von mindestens einem der Korrelationsmatrix, eines Korrelationskoeffizienten oder des Merkmalsvektors.

**15.** Basisstationsvorrichtung für eine Kanalinformationsquantifizierungsrückmeldung, die Folgendes umfasst:

eine Einstelleinheit (51), die dazu ausgelegt ist, einen Quantifizierungsrückmeldungsparameter von Kanalinformationen einzustellen; und
eine Benachrichtigungseinheit (52), die dazu ausgelegt ist, ein Endgerät über den Quantifizierungsrückmeldungsparameter von Kanalinformationen zu benachrichtigen, wobei die vom Endgerät rückgemeldeten Kanalinformationen Folgendes umfassen:

Kanalinformationsuntersätze, die L Ressourcengruppen entsprechen, wobei $L \geq 1$, wobei ein k-ter Kanalinformationsuntersatz der Kanalinformationsuntersätze $B_k$ Teile von Vorcodierungsanzeigeinformationen umfasst, wobei $L \geq k \geq 1$ und $B_k \geq 0$; und
Informationen über M Amplitudenkoeffizienten und Informationen über N Phasenkoeffizienten, wobei $M \geq 0$ und $N \geq 0$, und wobei M und N nicht beide null sein können,
wobei die Informationen über M Amplituden und die Informationen über N Phasenkoeffizienten durch Reduzieren einer ursprünglichen Kanalmatrix zu einer äquivalenten Kanalmatrix unter Verwendung der erhaltenen Vorcodierung jeder Gruppe erhalten werden,
Berechnen einer Korrelationsmatrix der äquivalenten Kanalmatrix und eines Merkmalsvektors der Korrelationsmatrix und Quantisieren von Amplitudenkoeffizienten und Phasenkoeffizienten von mindestens einem der Korrelationsmatrix, eines Korrelationskoeffizienten oder des Merkmalsvektors.

**Revendications**

1. Procédé de rétroaction de quantification d'informations de canal, comprenant le fait :

   de recevoir (101) d'une station de base, par un terminal, un paramètre de rétroaction de quantification d'informations de canal, et de renvoyer (102) des informations de canal quantifiées selon le paramètre de rétroaction de quantification d'informations de canal, dans lequel les informations de canal comprennent :

   des sous-ensembles d'informations de canal correspondant à L groupes de ressources, dans lequel $L \geq 1$, dans lequel un $k^{ème}$ sous-ensemble d'informations de canal parmi les sous-ensembles d'informations de canal comprend $B_k$ informations d'indication de précodage, dans lequel $L \geq k \geq 1$ et $B_k \geq 0$ ; et
   des informations sur M coefficients d'amplitude et des informations sur N coefficients de phase, dans lequel $M \geq 0$ et $N \geq 0$, et dans lequel M et N ne peuvent pas être tous les deux nuls,
   dans lequel les informations sur M amplitudes et les informations sur N coefficients de phase sont obtenues en réduisant une matrice de canal originale à une matrice de canal équivalente en utilisant le précodage obtenu de chaque groupe,

   de calculer une matrice de corrélation de la matrice de canal équivalente et un vecteur de caractéristiques de la matrice de corrélation, et de quantifier des coefficients d'amplitude et des coefficients de phase d'au moins un parmi la matrice de corrélation, un coefficient de corrélation ou le vecteur de caractéristiques.

2. Procédé de rétroaction de quantification d'informations de canal selon la revendication 1, dans lequel le paramètre de rétroaction de quantification d'informations de canal comprend au moins l'un des éléments suivants :

   des informations de configuration sur la manière de calculer les informations de canal ;
   des informations de regroupement des ressources ;
   des informations de configuration sur les livres de codes de précodage ;
   des informations de configuration sur la rétroaction d'indication de précodage ;
   des informations de configuration de rétroaction sur les coefficients d'amplitude ;
   des informations de configuration de rétroaction sur les coefficients de phase ;
   des informations de configuration sur une relation entre les informations de canal de différents groupes de ressources ; ou
   des informations de configuration de couche.

3. Procédé de rétroaction de quantification d'informations de canal selon la revendication 2, dans lequel les informations de configuration sur la manière de calculer les informations de canal comprennent au moins l'un des éléments suivants : une manière de transmettre des données, une manière de calculer une matrice de canal, une manière de calculer des interférences, une manière de construire un précodage, et l'acquisition en utilisant une ressource de données de livre de codes.

4. Procédé de rétroaction de quantification d'informations de canal selon la revendication 2, dans lequel les informations de regroupement des ressources comprennent au moins l'un des éléments suivants : une valeur de L, un nombre total de ressources comprises dans chaque groupe de ressources, et des informations d'attribution des ressources de chaque groupe de ressources.

5. Procédé de rétroaction de quantification d'informations de canal selon la revendication 2, comprenant en outre le fait : d'associer les informations de regroupement des ressources à des informations d'emplacement quasi commun (QCL).

6. Procédé de rétroaction de quantification d'informations de canal selon la revendication 2, comprenant en outre le fait : d'associer une $k^{ème}$ information de configuration sur les livres de codes de précodage à des informations de configuration sur le livre de codes de précodage dans un $k^{ème}$ groupe de ressources.

7. Procédé de rétroaction de quantification d'informations de canal selon la revendication 6, dans lequel

les informations de configuration sur le livre de codes de précodage dans le k$^{ème}$ groupe de ressources sont associées aux informations de regroupement des ressources ; et

les informations de configuration sur le livre de codes de précodage dans le k$^{ème}$ groupe de ressources sont associées à des informations d'attribution des ressources du k$^{ème}$ groupe de ressources,

dans lequel les informations de configuration sur le livre de codes de précodage dans le k$^{ème}$ groupe de ressources comprennent des informations de dimensions sur une matrice de précodage et/ou des informations sur le nombre total de matrices de précodage dans le livre de codes.

8. Procédé de rétroaction de quantification d'informations de canal, comprenant le fait :

de définir (201), par une station de base, un paramètre de rétroaction de quantification d'informations de canal, et de notifier (202) le paramètre de rétroaction de quantification d'informations de canal à un terminal, dans lequel les informations de canal renvoyées par le terminal comprennent :

des sous-ensembles d'informations de canal correspondant à L groupes de ressources, dans lequel L $\geq$ 1, dans lequel un k$^{ème}$ sous-ensemble d'informations de canal parmi les sous-ensembles d'informations de canal comprend B$_k$ informations d'indication de précodage, dans lequel L $\geq$ k $\geq$ 1 et B$_k \geq$ 0 ; et

des informations sur M coefficients d'amplitude et des informations sur N coefficients de phase, dans lequel M $\geq$ 0 et N $\geq$ 0, et dans lequel M et N ne peuvent pas être tous les deux nuls,

dans lequel les informations sur M amplitudes et les informations sur N coefficients de phase sont obtenues en réduisant une matrice de canal originale à une matrice de canal équivalente en utilisant le précodage obtenu de chaque groupe,

de calculer une matrice de corrélation de la matrice de canal équivalente et un vecteur de caractéristiques de la matrice de corrélation, et de quantifier des coefficients d'amplitude et des coefficients de phase d'au moins un parmi la matrice de corrélation, un coefficient de corrélation ou le vecteur de caractéristiques.

9. Procédé de rétroaction de quantification d'informations de canal selon la revendication 8, dans lequel le paramètre de rétroaction de quantification d'informations de canal comprend au moins l'un des éléments suivants :

des informations de configuration sur la manière de calculer les informations de canal ;
des informations de regroupement des ressources ;
des informations de configuration sur les livres de codes de précodage ;
informations de configuration sur la rétroaction d'indication de précodage
des informations de configuration de rétroaction sur les coefficients d'amplitude ;
des informations de configuration de rétroaction sur les coefficients de phase ;
des informations de configuration sur une relation entre les informations de canal de différents groupes de ressources ; ou
des informations de configuration de couche.

10. Procédé de rétroaction de quantification d'informations de canal selon la revendication 9,
dans lequel les informations de configuration sur la manière de calculer les informations de canal comprennent au moins l'un des éléments suivants : une manière de transmettre des données, une manière de calculer une matrice de canal, une manière de calculer des interférences, une manière de construire un précodage, et l'acquisition en utilisant une ressource de données de livre de codes.

11. Procédé de rétroaction de quantification d'informations de canal selon la revendication 9, dans lequel les informations de regroupement des ressources comprennent au moins l'un des éléments suivants : une valeur de L, un nombre total de ressources comprises dans chaque groupe de ressources, et des informations d'attribution des ressources de chaque groupe de ressources.

12. Procédé de rétroaction de quantification d'informations de canal selon la revendication 9, comprenant en outre le fait : d'associer les informations de regroupement des ressources à des informations d'emplacement quasi commun (QCL).

13. Procédé de rétroaction de quantification d'informations de canal selon la revendication 9, comprenant en outre le fait : d'associer une k$^{ème}$ information de configuration sur les livres de codes de précodage à des informations de configuration sur le livre de codes de précodage dans un k$^{ème}$ groupe de ressources.

**14.** Appareil terminal de rétroaction de quantification d'informations de canal, comprenant :

une unité de détermination (41), configurée pour recevoir un paramètre de rétroaction de quantification d'informations de canal d'une station de base ; et

une unité de rétroaction (42), configurée pour renvoyer des informations de canal quantifiées selon le paramètre de rétroaction de quantification d'informations de canal, dans lequel les informations de canal comprennent :

des sous-ensembles d'informations de canal correspondant à L groupes de ressources, dans lequel $L \geq 1$, dans lequel un $k^{\text{ème}}$ sous-ensemble d'informations de canal parmi les sous-ensembles d'informations de canal comprend $B_k$ informations d'indication de précodage, dans lequel $L \geq k \geq 1$ et $B_k \geq 0$ ; et

des informations sur M coefficients d'amplitude et des informations sur N coefficients de phase, dans lequel $M \geq 0$ et $N \geq 0$, et dans lequel M et N ne peuvent pas être tous les deux nuls,

dans lequel les informations sur M amplitudes et les informations sur N coefficients de phase sont obtenues en réduisant une matrice de canal originale à une matrice de canal équivalente en utilisant le précodage obtenu de chaque groupe,

de calculer une matrice de corrélation de la matrice de canal équivalente et un vecteur de caractéristiques de la matrice de corrélation, et la quantification des coefficients d'amplitude et des coefficients de phase d'au moins un parmi la matrice de corrélation, un coefficient de corrélation ou le vecteur de caractéristiques.

**15.** Appareil de station de base de rétroaction de quantification d'informations de canal, comprenant :

une unité de réglage (51), configurée pour régler un paramètre de rétroaction de quantification d'informations de canal ; et

une unité de notification (52), configurée pour notifier le paramètre de rétroaction de quantification d'informations de canal à un terminal, dans lequel les informations de canal renvoyées par le terminal comprennent :

des sous-ensembles d'informations de canal correspondant à L groupes de ressources, dans lequel $L \geq 1$, dans lequel un $k^{\text{ème}}$ sous-ensemble d'informations de canal parmi les sous-ensembles d'informations de canal comprend $B_k$ informations d'indication de précodage, dans lequel $L \geq k \geq 1$ et $B_k \geq 0$ ; et

des informations sur M coefficients d'amplitude et des informations sur N coefficients de phase, dans lequel $M \geq 0$ et $N \geq 0$, et dans lequel M et N ne peuvent pas être tous les deux nuls,

dans lequel les informations sur M amplitudes et les informations sur N coefficients de phase sont obtenues en réduisant une matrice de canal originale à une matrice de canal équivalente en utilisant le précodage obtenu de chaque groupe,

de calculer une matrice de corrélation de la matrice de canal équivalente et un vecteur de caractéristiques de la matrice de corrélation, et la quantification des coefficients d'amplitude et des coefficients de phase d'au moins un parmi la matrice de corrélation, un coefficient de corrélation ou le vecteur de caractéristiques.

101

Determine, by a terminal, a quantification feedback parameter of channel information

102

Feed back quantized channel information according to the quantification feedback parameter of channel information, where the channel information includes at least one of the following: information about M amplitude coefficients, and information about N phase coefficients, where $M \geq 0$ and $N \geq 0$; and channel information subsets corresponding to L resource groups, where $L \geq 1$, where the kth channel information subset among the channel information subsets includes $B_k$ pieces of precoding indication information, where $L \geq k \geq 1$ and $B_k \geq 0$

## FIG. 1

201

Set, by a base station, a quantification feedback parameter of channel information

202

Notify, by the base station, the quantification feedback parameter of channel information to a terminal, where the channel information includes at least one of the following: information about M amplitude coefficients and information about N phase coefficients , where $M \geq 0$ and $N \geq 0$; and channel information subsets corresponding to L resource groups, where $L \geq 1$, where the kth channel information subset of the channel information subsets includes $B_k$ pieces of precoding indication information, where $L \geq k \geq 1$ and $B_k \geq 0$

## FIG. 2

**FIG. 3**

**FIG. 4**

Association unit 53

Setting unit 51

Notification unit 52

# FIG. 5

Processor 61

Memory 62

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160080058 A1
- EP 2800290 A1

- US 20140177745 A1